# EUROPEAN PATENT APPLICATION

(11) **EP 1 566 320 A1**
(43) Date of publication of application: **24.08.2005**
(21) Application number: 04425099.1
(22) Date of filing: 18.02.2004
(51) Int. Cl.: B60T 17/02, F02M 35/00, F16L 11/00

(54) **Flexible vacuum reservoir and connection element**

(71) Applicant: Parisch, Maurizio Walter, 10078 Venaria (TO) (IT)
(72) Inventor: Parisch, Maurizio Walter, 10078 Venaria (TO) (IT)
(74) Representative: Garavelli, Paolo

(57) **Abstract**

A flexible vacuum reservoir and connection element (1) is provided, comprising an elongated element (20) equipped with at least one supplying and vacuum-keeping valve element (30) to be connected to a vacuum suction pump (60), and at least one outlet (50) adapted to be connected to a respective user to be served; the elongated element (20) is adapted to be conformed in order to be directly connected (40) to the user or to position the outlet (50) nearer to the user than what a traditional vacuum reservoir does.

## Description

The present invention refers to a flexible vacuum reservoir and connection element, particularly for use in the automotive field on vehicles equipped with combustion engine with any type of feeding.

As is well known in the art, despite there are numerous solutions, the vacuum reservoirs generally used are typically composed of a rigid structure, typically made of plastic material, secured, for example, through suitable supports and, often, necessary mechanical machinings (studs, drilling, threading, metal hangers, thermal insulations, etc.) in a determined position inside the engine compartment of a motor vehicle. These vacuum reservoirs are connected, through more or less long and complex suitable piping and fitting systems, to the users to be served and, by interposing a valve body, to the engine vacuum pump whose pressure values control the opening of such valve body. Furthermore, the connection pipes need a proper insulation, occupy a non-negligible space in the engine compartment, and, generally make the engine systems complex.

Further, it is known that in the vacuum systems it is extremely important that the valve body has a perfectly hermetic seal, already with low vacuum values generated upon starting the engine.

According to what has been stated above, the known vacuum reservoirs have several drawbacks: first of all, they require the use of numerous connection pipes joined together for junction both to the vacuum pump and to the users, in which the seal of such fittings becomes a critical aspect for the good operation of such reservoir; it is clear that this aspect is of remarkable economic and technical impact, since the several components of the known vacuum systems and the sensibility that such systems introduce to their installation, negatively affect system reliability and production and installation costs. Moreover, such systems require, typically already in the design phase of the motor vehicle engine assembly, to provide for encumbrances and arrangements of individual components, becoming a factor that increases design complexity.

Finally, it is evident that also ordinary and extraordinary maintenance activities of the motor vehicle engine suffer such complexity of known vacuum systems known, since their possible disassembling requires the disconnection of connection pipes and related fittings, that is typically a lengthy operation, with consequent re-assembling criticalites of the fittings themselves with risks of breakage and tears.

Object of the present invention is solving the above-said prior art problems by providing a flexible vacuum reservoir and connection element which is at the same time a vacuum reservoir and a connection element, drastically reducing the lengths of the connection pipes and the number of necessary fittings.

Another object of the present invention is providing a flexible vacuum reservoir and connection element that, due to the length reduction of the connection pipes and the number of used fittings is of cheaper, simpler and more reliable manufacture than known vacuum reservoirs.

Moreover, another object of the present invention is providing a flexible vacuum reservoir and connection element that is able to assume forms, sizes and arrangement in the engine compartment depending on specific applications.

The aforesaid and other objects and advantages of the invention, as will result from the following description, are reached with a flexible vacuum reservoir and connection element as described in claim 1. Preferred embodiments and non-trivial variations of the present invention are the object of the dependent claims.

The present invention will be better described by some preferred embodiments thereof, provided as a nonlimiting example, with reference to the enclosed drawings, in which:
- FIG. 1 shows a schematic view of a known vacuum system;
- FIG. 2 shows another schematic view of the vacuum system shown in FIG. 1;
- FIG. 3 shows another schematic view of the vacuum system shown in FIG. 1;
- FIG. 4 shows a schematic view of a flexible vacuum reservoir and connection element according to the present invention;
- FIG. 5 shows another schematic view of the flexible vacuum reservoir and connection element shown in FIG. 4; and
- FIG. 6 shows another schematic view of the flexible vacuum reservoir and connection element shown in FIG. 4.

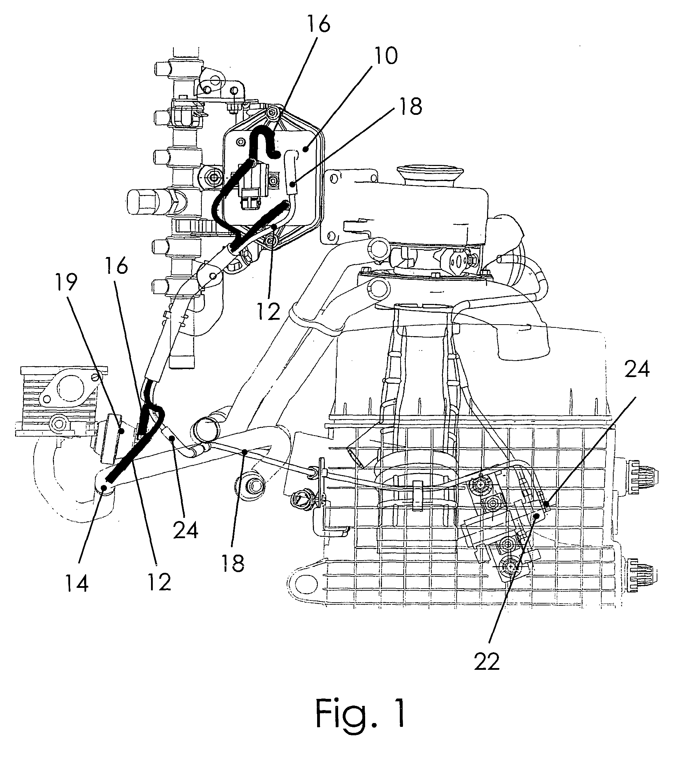

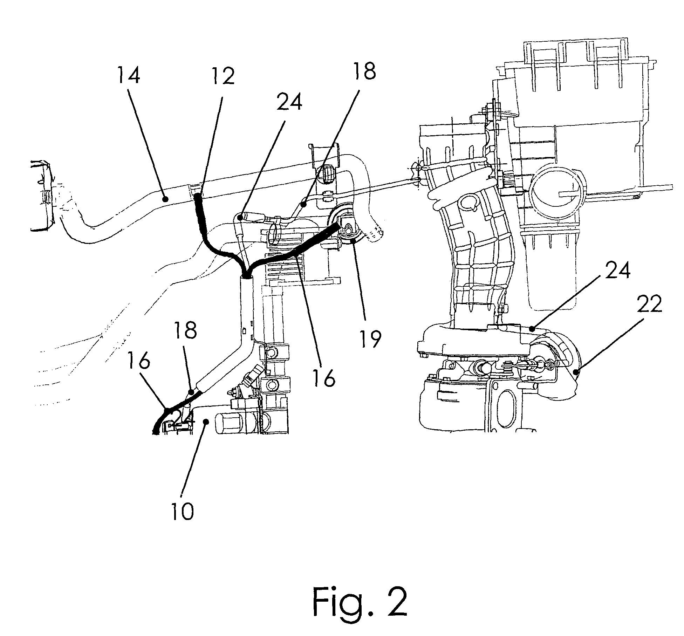

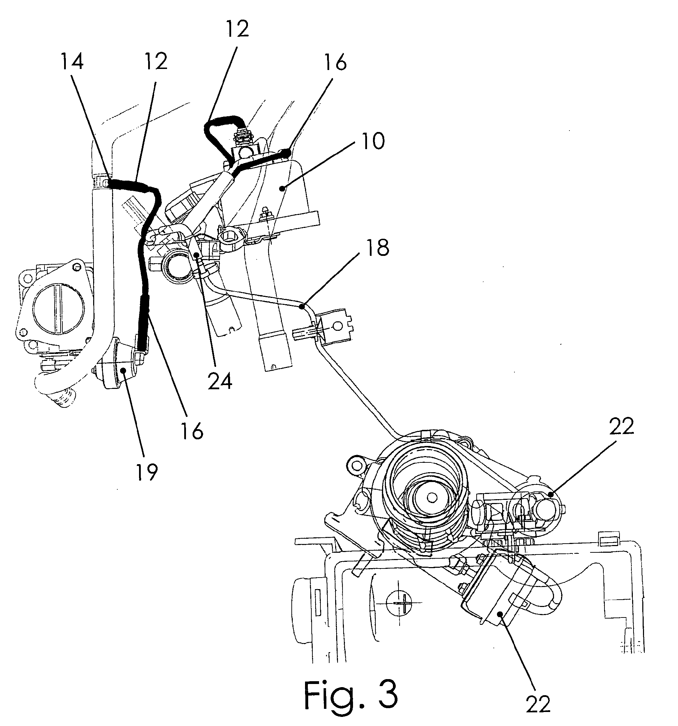

With reference to FIGs. 1, 2 and 3, it is possible to note an exemplary representation of a known vacuum system; such system comprises a container and a ribbed cover that are typically joined together through suitable weldings in order to form a vacuum reservoir 10 containing a valve body. The container is provided, on one side, with supports fixing such container to the engine compartment and, on another side, with a connection pipe 12 to the vacuum suction pump 14 and two other connection pipes 16, 18 to the solenoid valves for controlling the users that must be actuated that, in case of FIG. 1, are respectively the throttle body 19 and the turbosupercharger valve 22. It is further possible to note, especially as regards the connection pipe 18 to the turbosupercharger valve 22, the presence of numerous fittings 24 adapted to give the pipe 18 the necessary path shape. It is evident, therefore, that the vacuum system configuration shown in FIGs. 1, 2 and 3 has all the previously-stated problems.

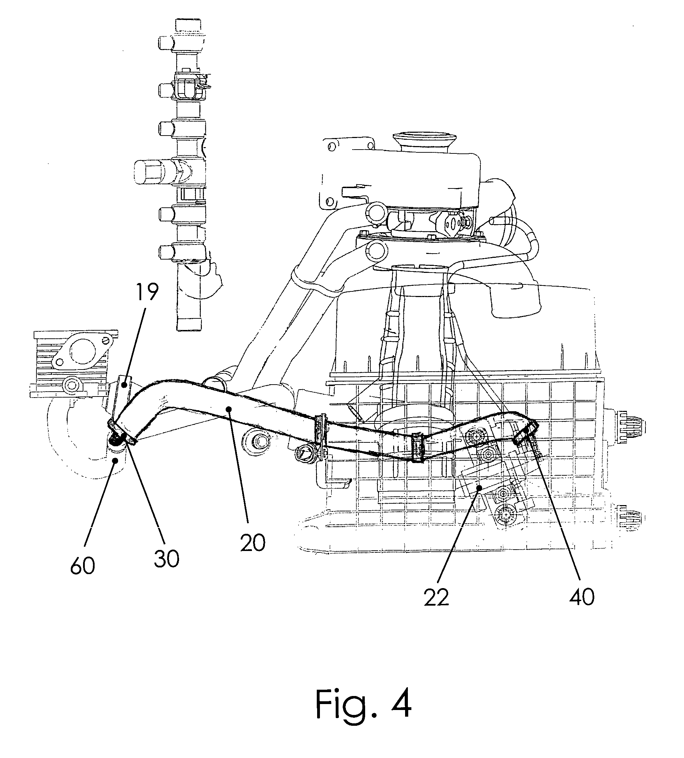

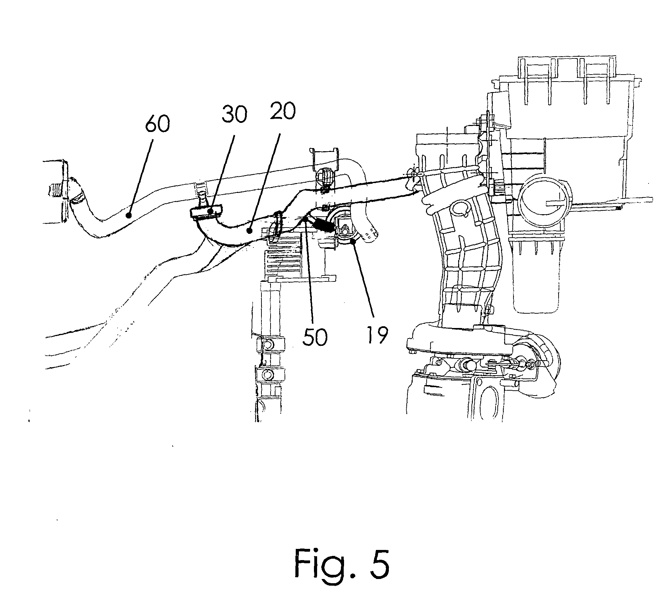

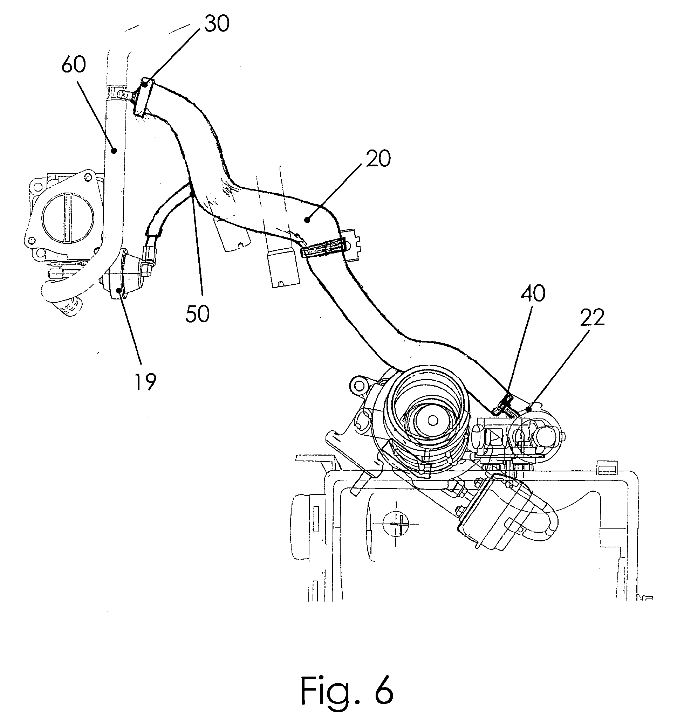

With reference to FIGs. 4, 5 and 6, it is possible to note a flexible vacuum reservoir and connection element 1 according to the present invention. The element 1 allow obtaining a vacuum reserve without occupying predefined spaces, freeing the engine compartment from encumbrances and fixings of traditional components, thereby reaching a remarkable assembling simplification and simultaneously reducing both the costs of required materials and the related machinings.

The element 1 is composed of an elongated element 20 (preferably, but not in a limiting way, of a tubular shape, since its section could have the shape of any polygon) that performs the functions both of a vacuum reservoir and of a connection element to the engine parts to be served; in fact, the elongated element 20 replaces the traditional vacuum reservoir and, given its particular conformation, it can adequately be arranged in order to directly reach the users, doing accordingly without the connection pipes, or in order to be placed extremely near the users themselves, considerably reducing the lengths of the connection pipes and the number of fittings, thereby increasing their reliability.

Particularly, from FIGs. 4, 5 and 6 and the comparison with FIGs. 1, 2 and 3, it is possible to see that the element 1, connected to the same traditional system components, allows highly rationalising the spaces and greatly reducing complexity and number of components. The element 20 is equipped with a supply and vacuum-keeping valve element 30, composed of an elastomeric element, which is pushed by a spring and it is equipped with a micrometric filter adapted to hold back possible impurities inside the element 20 itself. Such valve element is connected to the existing fitting 60 of the motor vehicle servo brake pipe.

The element 20 is further equipped with at least one supply outlet 50 adapted to be connected to a respective solenoid valve for a user to be served and obtained on the elongated element 20 in its most suitable position, as is shown, for example, in FIGs. 4, 5 and 6, in which one of such outlets 50 is used to connect the elongated element 20 to the throttle body 19. It is clear that the number of outlets is variable and depends on the number of users: an extremely interesting aspect of the element 1 of the present invention is that each of these outlets can be positioned on the tubular element in the most appropriate position and can be directly connected to the users, as it happens, for example, in an end 40 of the elongated element 20 that is directly connected to the turbosupercharger valve 22 or placed as near as possible to the users themselves.

The elongated element 20 of the flexible vacuum reservoir and connection element 1 can be made, depending on specific applications, of rigid material, such as metallic alloys, plastics, composites, or flexible material, preformed and/or conformed to the spaces in which it has to be installed and depending on the positions of the users to be served.

From all that has been stated above, it is clear that an advantageous aspect of the element 1 is that it allows the chance of using, as integral part of its own circuit, suitably modified parts of other components.

Moreover, the element 1 of the present invention can be secured along the internal surface of the motor vehicle body in the engine compartment through plastic clips with very low costs and easy assembling, thereby doing without the need of performing long and expensive mechanical machinings for installing the vacuum system as for the traditional vacuum reservoirs.

In an alternative embodiment (not shown), the element 1 according to the present invention can be equipped with its own vacuum pump, directly connected to the valve body: this arrangement allows using the present invention as vacuum reserve and connection element, even in situations in which there are no vacuum devices to which it has to be connected as supply, or in which these devices are present but arranged in hardly accessible or unusable positions.

## Claims

1. Flexible vacuum reservoir and connection element (1), **characterized in that** it comprises an elongated element (20) equipped with at least one supplying and vacuum-keeping valve element (30) adapted to be connected to a vacuum suction pump, and at least one outlet (50) adapted to be connected to a respective user to be served, said elongated element (20) being adapted to be conformed in order to directly connect said outlet (50) to said user or to place said outlet (50) nearer to said user than what a traditional vacuum reservoir does.

2. Element (1) according to claim 1, **characterised in that** said elongated element (20) has a tubular shape.

3. Element (1) according to claim 2, **characterised in that** said elongated element (20) is made of rigid material, preferably of a metallic alloy, plastic or a composite.

4. Element (1) according to claim 2, **characterised in that** said elongated element (20) is made of flexible material.

5. Element (1) according to claim 1, **characterised in that** the section of said elongated element (20) is shaped as a polygon.

6. Element (1) according to claim 1, **characterised in that** said valve element (30) is composed of an elastomeric element pushed by a spring, said valve element (30) being further equipped with a micrometric filter adapted to hold back impurities contained in said element (1).

7. Element (1) according to claim 1, **characterised in that** it is equipped with its own vacuum pump directly connected to said valve element (30).
